# EUROPÄISCHE PATENTANMELDUNG

(11) **EP 4 691 895 A1**
(43) Veröffentlichungstag der Anmeldung: **11.02.2026**
(21) Anmeldenummer: 25000049.4
(22) Anmeldetag: 13.05.2025
(51) Int. Cl.: B62K 25/02

(54) **STECKACHSE**

(30) Priorität: 08.08.2024 DE 202024001498 U
(71) Anmelder: Ortlieb, Hartmut, 91560 Heilsbronn (DE)
(72) Erfinder: Ortlieb, Hartmut, 91560 Heilsbronn (DE)
(74) Vertreter: Dorn, Dietmar

(57) **Zusammenfassung**

Steckachse insbesondere für Fahrräder mit Durchmesser 12 mm, wobei
die Achse an einem Ende mit einem Außengewinde M12 und an ihren beiden Enden mit Innengewinden, Gewindebohrung M6 und einem Innensechskantschlüsselansatz 6 mm vor dem Gewinde M6, wenigstens an dem Ende ohne M12 Gewinde ausgestattet ist.

## Beschreibung

Seit mehreren Jahren setzt sich im Fahrradbereich der Trend durch, dass immer mehr Steckachsen mit Durchmesser 12 mm eingesetzt werden.

Einerseits setzen sich Scheibenbremsen durch, hierbei müssen die Achsen größeren Belastungen als bei Felgenbremsen widerstehen. Genauso wird durch den E-Bike Trend das Fahrrad schwerer, insbesondere auch Lastenbikes. Für sportliche Aktivitäten mit Mountain-Bikes, Gravelbike und dergleichen, werden genauso stabilere, stärkere Achsen gewünscht.

Traditionell werden viele Anbauteile am Fahrrad an (Gewinde-) Ösen für M5 Schrauben am Hinterbau des Fahrrads befestigt, welche viel früher, insbesondere für die Befestigung von Schutzblechstreben gedacht waren. Gleichwohl wurden früher und werden diese Ösen auch für die Befestigungen von Gepäckträgern eingesetzt. Das Fahrrad setzt sich immer weiter als das umweltfreundliche Standardtransportmittel durch. Hierzu wünscht der Kunde hochwertige und sichere Komponenten, wobei beispielsweise Anbieter von hochwertigen, hochstabilen Gepäckträgern diese nur für Gewichte bis 26 kg zulassen, auch wenn diese weit höhere Lasten tragen könnten.

Da aber durch eine immer strengere Produkthaftung, die Hersteller es nicht zulassen wollen, dass auf Ihre Gepäckträger Kindersitze an lediglich diesen (Gewinde-) Ösen für M5 befestigt werden sind hier Lösungen gesucht, insbesondere weil die Gepäckträgerhersteller selbst, keinen Einfluss auf die am Fahrrad angeordneten Gepäckträger Ösen am Fahrrad haben.

Diese Überlegung wird umso relevanter, je leichter manche Fahrräder in bestimmten Marktsegmenten werden, zumal komplexe Composite Materialien hinsichtlich der Festigkeit der eingearbeiteten Befestigungsösen auch schwer einschätzbar sind. Selbst in den USA und England setzt sich bei Steckachsen das Metrische System durch.

Wünschenswert wäre dahingehend eine verstärkte Achse für Fahrräder, welche die Stabilität erhöhen kann und zu einer Entlastung der an Fahrradrahmen angeordneten (Gewinde)- Ösen für insbesondere M5 Gewinde beiträgt und welche darüber hinaus, für eine Vielzahl von Fahrrädern verwendbar ist.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist eine Steckachse für Fahrräder mit Durchmesser 12 mm, wobei die Achse an einem Ende mit einem Außengewinde M12 und an ihren beiden Enden mit Innengewinden, Gewindebohrung M6 und einem Innensechskantschlüsselansatz 6 mm vor dem Gewinde M6, wenigstens an dem Ende ohne M12 Gewinde ausgestattet ist.

Vorgeschlagen wird hier eine Steckachse, die vor allem für den Verkauf von Zubehör für den Aftersalesmarkt eine verlässliche sichere Grundlage für die Befestigung von Gepäckträgern und anderem Zubehör darstellen kann. Eigenschaften dieser Achse sind eine Kombination folgender Merkmale: Beidseitige Gewindebohrungen die größer als M5 sind, es wird hier M6 vorgeschlagen, verlängerte Außen-Gewinde über 25 mm lang, Innensechskant 6 mm zumindest an der Nichtgewindeseite. Diese Achsen können als Hohlachse oder auch als Vollmaterialachse angeboten werden.

Bestehende Achsen von Fahrrädern können gegen die hier vorgeschlagene Achse ausgetauscht werden, wobei die Gewindeseite der Achse ein gutes Stück durch das Ausfallende des Rahmens auf der Gewindeseite hindurch geschraubt wird, um einen gleich langen Überstand über die Ausfallenden des Fahrrads bei Berücksichtigung der Breite Schraubseitenkopfes zu gewährleisten. Im Zubehörmarkt ist es gewünscht, Produkte anzubieten, die auf möglichst viele verschiedene Fahrradfabrikate und Ausführungen angewendet werden können. Es wird hier eine Länge zwischen 175-190 mm vorgeschlagen, um bei einer sinnvollen Anzahl von Spacern und einer sinnvollen Länge des Gewindes eine gute Montierbarkeit für die gängigsten Fahrradfabrikate zu ermöglichen, so dass die mittige Anbringung in Bezug auf die Fahrradlängsachse möglich wird, um zum Beispiel die spurgenaue Anbringung von Schutzblechen zu ermöglichen. Durch die breite Anbringung von Gepäckträgern, werden die Befestigungen diese stabiler, weil die seitliche Schwingfestigkeit des Gepäckträgers durch stärker ausgebildete Trapezform der Gepäckträgerstützrohre vergrößert wird.

Weiterhin wird eine mehrteilige Steckachse mit den obigen Merkmalen vorgeschlagen, die hinsichtlich der Breite verstellbar ist. Hierbei werden auch ungewöhnlich breite und ungewöhnlich schmale Hinterbauten von Fahrrädern abgedeckt. Auch können diese Achsen für die Befestigung von Vorderradgepäckträgern am Vorderrad des Fahrrades genutzt werden. Hierbei ist es möglich ein linkes Basisteil mit mehreren rechten kurzen und dadurch günstigen Gewindeteilen anzubieten. Diese haben vorzugsweise die Gewindegröße M12x1, M12x1,5, M12x1,75. Vorteil kann bei solch einem Set sein, dass der Endverbraucher die Steckachse später auch auf einem anderen Fahrrad mit einem anderen Gewinde montieren kann. Hier wird auf jeden Fall auf beiden Seiten der Steckachse ein Schraubenansatzmerkmal benötigt, vorzugsweise M6.

Im Folgenden wird die Erfindung anhand von Zeichnungen beispielhaft näher beschrieben, dabei zeigen:

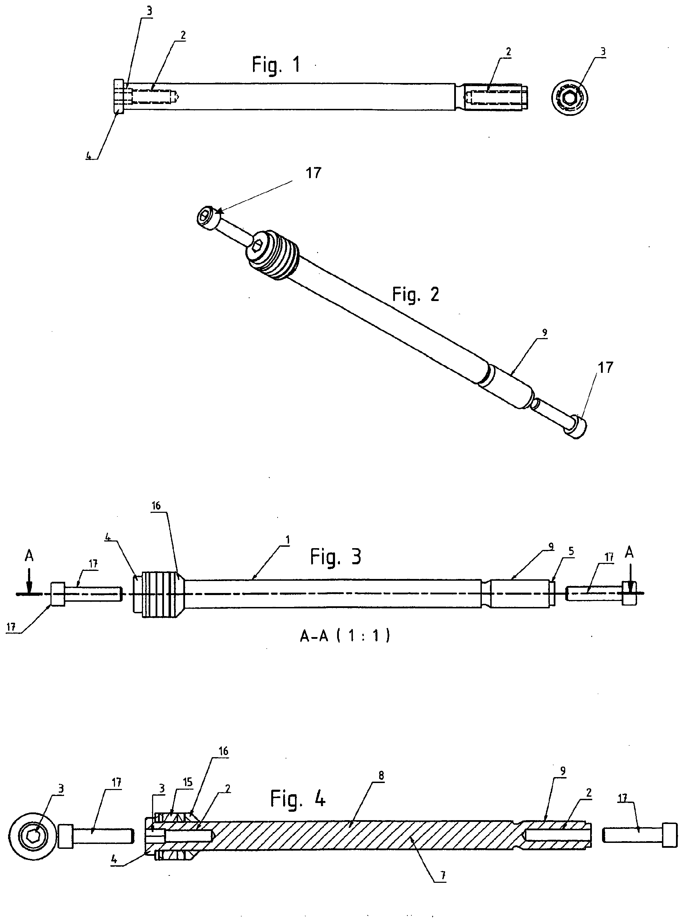

Fig. 1 bis Fig. 3 eine einteilige Steckachse mit einem, an einem Ende angeordneten M12 Außengewindebereich 9, sowie an beiden Enden der Steckachse angeordneten Innengewinden 2 in welche nach Montage der Steckachse zwischen den Ausfallenden des Fahrrades, Zubehör mittels der Schrauben 17 stabil am Fahrrad befestigt werden kann. Wenigstens an dem, dem Außengewindebereich 9 abgewandten Ende der Achse, ist vor dem Innengewinde 2 ein Innensechskantbereich 3 angeordnet, mittels welchem sich die Achse montieren und verschrauben lässt.

Mittels vorgesehener Zwischenscheiben 15 und entsprechendem Zwischenkonus 16 lässt sich die Achse mittig anordnen und in dieser Position fixieren. Durch die Möglichkeit als Zubehör- Befestigungsschrauben 17 Schrauben M6 verwenden zu können, kann Zubehör oder ein Gepäckträger sehr viel stabiler und sicherer an einem Fahrrad angebracht werden als bisher.

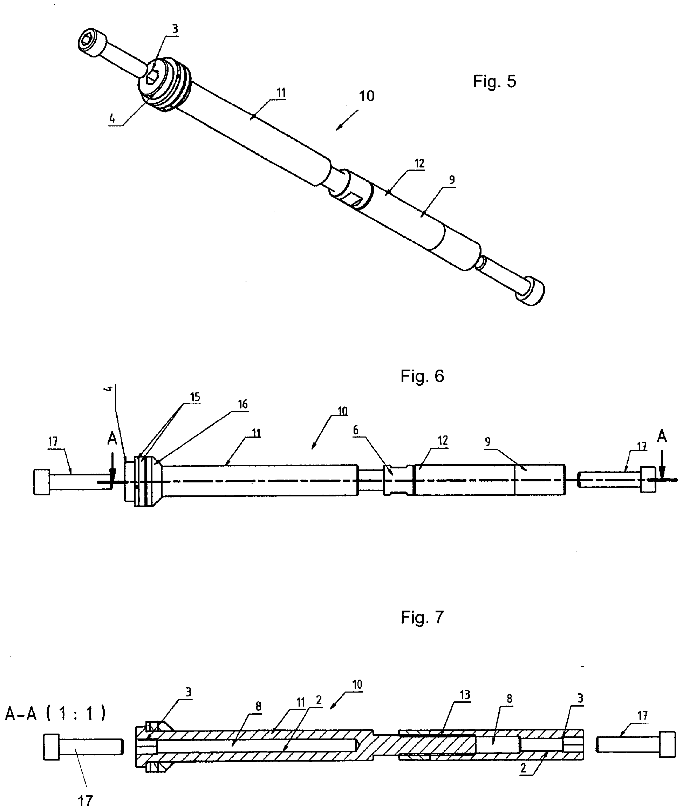

Die Steckachse, wie in den Fig. 5 bis Fig. 7 gezeigt kann als mehrteilige Achse 10 ausgeführt sein und über verschiedene, beispielsweise Schraubteile 11 und/oder Distanzadapter 6 verfügen mittels welcher unterschiedliche, individuell benötigte Längen der Steckachse für nahezu jedes Fahrrad realisierbar sind.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Steckachse für Fahrräder mit Durchmesser 12 mm,
**dadurch gekennzeichnet,**
**dass** die Achse an einem Ende mit einem Außengewinde M12 (9) und an ihren beiden Enden mit Innengewinden, Gewindebohrung M6 (2) und einem Innensechskantschlüsselansatz 6 mm (3) vor dem Gewinde M6, wenigstens an dem Ende ohne M12 Gewinde ausgestattet ist.

2. Steckachse für Fahrräder mit Durchmesser 12 mm nach Anspruch 1,
**dadurch gekennzeichnet,**
**dass** diese als Hohlachse ausgebildet ist.

3. Steckachse für Fahrräder mit Durchmesser 12 mm nach Anspruch 1,
**dadurch gekennzeichnet,**
**dass** sie ein verlängertes Gewinde M12 (9) mit mindestens 25 mm Länge aufweist.

4. Steckachse für Fahrräder mit Durchmesser 12 mm nach Anspruch 1,
**dadurch gekennzeichnet,**
**dass** sie auch auf der Gewindeseite einen Innensechskantschlüsselansatz 6 mm (3) aufweist.

5. Steckachse für Fahrräder mit Durchmesser 12 mm nach Anspruch 1,
**dadurch gekennzeichnet,**
**dass** die Achse eine Länge zwischen 175 mm und 190 mm aufweist.

6. Steckachse für Fahrräder mit Durchmesser 12 mm nach Anspruch 1,
**dadurch gekennzeichnet,**
**dass** die Mittigkeit der Gewindeenden M6 in Bezug auf die Längsmittelachse des Fahrrads durch verschiedene Zwischenscheiben (15) und Zwischenkonusse (16) erreichbar ist.

7. Steckachse für Fahrräder mit Durchmesser 12 mm nach Anspruch 1,
**dadurch gekennzeichnet,**
**dass** die Achse mehrteilig aufgebaut ist.

8. Steckachse für Fahrräder mit Durchmesser 12 mm nach Anspruch 1 und 7,
**dadurch gekennzeichnet,**
**dass** die mehrteilige Achse mit einem linken Schraubteil (4) und einem rechten Gewindeteil (9) und einem Innensechskantschlüsselansatz 6 mm (3) auf beiden Seiten hat.

9. Steckachse für Fahrräder mit Durchmesser 12 mm nach Anspruch 1,
**dadurch gekennzeichnet,**
**dass** die Länge der mehrteiligen Achse mit einem linken Schraubteil und einem rechten Gewindeteil M12 mittels einem Zwischengewinde (13) oder einer oder mehrerer Zwischenhülsen im Abstand veränderbar ist.

10. Steckachse für Fahrräder mit Durchmesser 12 mm nach Anspruch 1 und 7,
**dadurch gekennzeichnet,**
**dass** die mehrteilige Achse ein Konterstück zwischen linkem Schraubteil und Gewindeteil M12 aufweist.

11. Mehrteilige Steckachse für Fahrräder mit Durchmesser 12 mm nach Anspruch 1 und 7,
**dadurch gekennzeichnet,**
**dass** sie als Set, angeboten mit mehreren Gewindeteilen M12 , vorzugsweise M12x1, M12x1,5, M12x1,75 ausgeführt ist.

12. Steckachse für Fahrräder mit Durchmesser 12 mm nach Anspruch 1,
**dadurch gekennzeichnet,**
**dass** das verlängerte Gewinde M12 am Ende, im Wesentlichen auf einem kleinen Stück vorzugsweise 3 mm - 8 mm etwa auf Gewindekerndurchmesser abgedreht (5) ist.
